# FASCICULE DE BREVET EUROPEEN

(11) **EP 3 740 429 B1**
(45) Date de publication et mention de la délivrance du brevet: **09.03.2022**
(21) Numéro de dépôt: 19718796.6
(22) Date de dépôt: 25.03.2019
(51) Int. Cl.: B64D 35/02, B64D 35/04, B64C 39/02, B64C 27/08, B64D 27/24, H02J 4/00, B64D 27/02

(54) **SYSTÈME PROPULSIF D'AÉRONEF MULTIROTOR AVEC RÉSEAU ÉLECTRIQUE RECONFIGURABLE**
MEHRROTORFLUGZEUGANTRIEBSSYSTEM MIT REKONFIGURIERBAREM STROMNETZ
MULTIROTOR AIRCRAFT PROPULSION SYSTEM WITH RECONFIGURABLE POWER NETWORK

(30) Priorité: 26.03.2018 FR 1852607
(43) Date de publication de la demande: 25.11.2020
(73) Titulaire: SAFRAN, 75015 Paris (FR); Safran Electrical & Power, 31702 Blagnac Cedex (FR); Safran Helicopter Engines, 64510 Bordes (FR); Safran Power Units, 31200 Toulouse (FR); SAFRAN ELECTRONICS & DEFENSE, 92100 Boulogne Billancourt (FR)
(72) Inventeur: KLONOWSKI, Thomas, 77550 Moissy-Cramayel (FR); BARRACO, Thomas, 77550 Moissy-Cramayel (FR); SERGHINE, Camel, 77550 Moissy-Cramayel (FR)
(74) Mandataire: Brevalex
(86) Numéro de dépôt international: PCT/FR2019/050673
(87) Numéro de publication internationale: WO 2019/186042

(56) Documents cités:
- EP-A1- 3 296 212
- EP-A1- 3 318 492
- CN-A- 105 711 826
- US-A1- 2011 184 579
- US-A1- 2016 340 051
- US-B2- 9 143 029

## Description

### DOMAINE TECHNIQUE

L'invention se situe dans le domaine des aéronefs à voilure tournante multirotor. Elle concerne un système propulsif pour un tel aéronef comportant un réseau électrique reconfigurable pour alimenter les moteurs électriques d'entraînement des rotors. Le système propulsif peut équiper aussi bien un aéronef sans pilote qu'un aéronef embarquant un équipage.

### ÉTAT DE LA TECHNIQUE ANTÉRIEURE

Les aéronefs à voilure tournante multirotor comportent généralement au moins quatre moteurs électriques alimentés en parallèle depuis une source d'alimentation électrique commune. Pour des aéronefs de puissance relativement limitée, cette source d'alimentation est typiquement une batterie électrique. Elle peut consister en un ensemble de génération de puissance thermoélectrique pour des aéronefs plus puissants. Cet ensemble comprend alors un moteur thermique et un générateur électrique pour transformer l'énergie mécanique fournie par le moteur thermique en énergie électrique. Des convertisseurs de puissance sont souvent associés à l'ensemble afin d'adapter l'énergie électrique fournie aux besoins des moteurs électriques. Un système propulsif comprenant un tel ensemble de génération de puissance thermoélectrique est communément appelé « architecture à hybridation série ».

Afin de permettre le pilotage des aéronefs à voilure tournante multirotor, les moteurs électriques doivent pouvoir être commandés et alimentés individuellement ou au moins par groupes. Il en résulte une multiplication des circuits de commande et d'alimentation, notamment des convertisseurs de puissance, ainsi que des câbles d'alimentation. L'encombrement, le poids, la complexité et la fiabilité du système propulsif deviennent alors un handicap. La demande de brevet portant le numéro de dépôt FR 16 59366 propose de mutualiser en partie la fonction de conversion d'énergie électrique pour différents moteurs électriques dans un système propulsif pour aéronef multirotor. Chaque onduleur vient alors alimenter deux moteurs électriques, divisant par deux le nombre d'onduleurs nécessaires.

Dans la plupart des systèmes propulsifs pour aéronef, les moteurs électriques sont connectés en parallèle à la source d'alimentation électrique. En cas de défaut électrique au niveau d'un moteur électrique, d'un onduleur ou entre un onduleur et la source d'alimentation électrique, c'est l'ensemble du système de propulsion qui devient inopérant si aucun dispositif de protection n'est prévu. Avec une alimentation en parallèle, le choix peut être fait de mutualiser au maximum le câblage des différents moteurs électriques. Les dispositifs de protection électriques sont alors disposés à proximité des moteurs électriques. Un défaut électrique affectant la ligne d'alimentation commune entraîne alors la perte de l'ensemble du système de propulsion. A contrario, en choisissant d'individualiser au maximum le câblage des moteurs électriques, les dispositifs de protection électriques peuvent être disposés à proximité de la source d'alimentation. Il est alors possible d'isoler une ligne d'alimentation défaillante en conservant les autres lignes et donc en maintenant l'alimentation des autres moteurs électriques. La multiplicité des lignes d'alimentation présente en revanche l'inconvénient d'un encombrement et d'une complexité accrus.

Le document EP 3318492 A1, état de la technique au titre de l'article 54(3) CBE, décrit un système de propulsion distribué pour un aéronef utilisant à la fois une alimentation électrique AC et une alimentation électrique DC. Dans un exemple de réalisation, des propulseurs sont chacun aptes à être alimentés par un circuit AC ou par un circuit DC. Des interrupteurs sont disposés au niveau de chaque propulseur afin de sélectionner l'un des circuits devant l'alimenter. Le document US 2016/340051 A1 décrit un réseau électrique d'aéronef comprenant des bus d'alimentation AC, des générateurs électriques entraînés par des turbines à gaz, des moteurs et des interrupteurs agencés pour permettre d'assurer une isolation entre les moteurs et les bus. Le document CN 105 711826 A décrit un aéronef à alimentation hybride comprenant un moteur à combustion interne, un alternateur, un redresseur, une batterie et des moteurs électriques entrainant des hélices.

Compte tenu de ce qui précède, l'invention a pour objectif de fournir une solution pour éviter la perte de fonctionnement de l'ensemble du système propulsif en cas de défaut électrique tout en évitant la multiplication des lignes d'alimentation. L'invention a encore pour objectif de fournir un système propulsif pour aéronef multirotor dont les coûts de conception, de fabrication et de maintenance sont réduits.

### EXPOSÉ DE L'INVENTION

À cet effet, l'invention repose sur un réseau électrique reconfigurable annulaire, chaque moteur électrique pouvant être alimenté par les deux extrémités de l'anneau, ou par une seule extrémité en cas de défaut électrique entre le moteur électrique et l'autre extrémité de l'anneau.

Plus précisément, l'invention a pour objet un système propulsif pour aéronef à voilure tournante multirotor, comprenant :
▪ une source d'alimentation électrique apte à délivrer un courant d'alimentation,
▪ un bus d'alimentation électrique connecté à la source d'alimentation électrique,
▪ au moins quatre groupes moteurs, chaque groupe moteur comportant un circuit de commande, un moteur électrique connecté au circuit de commande et une hélice couplée mécaniquement à un rotor du moteur électrique, le circuit de commande étant apte à alimenter le moteur électrique à partir du courant d'alimentation délivré par la source d'alimentation électrique, et
▪ un réseau électrique annulaire apte à connecter le circuit de commande de chaque groupe moteur au bus d'alimentation électrique, le réseau électrique annulaire comportant :
   - une ligne électrique dont une première extrémité et une deuxième extrémité sont connectées au bus d'alimentation électrique, la ligne électrique étant interrompue au niveau de chaque groupe moteur et comprenant un premier point de connexion du côté de sa première extrémité et un deuxième point de connexion du côté de sa deuxième extrémité, et
   - pour chaque groupe moteur, un premier interrupteur et un deuxième interrupteur, le premier interrupteur connectant le circuit de commande du groupe moteur au premier point de connexion de la ligne électrique, le deuxième interrupteur connectant ledit circuit de commande au deuxième point de connexion de la ligne électrique.

Ainsi, en cas de défaut électrique au niveau de l'un des groupes moteurs, le groupe moteur concerné peut être isolé électriquement en ouvrant les deux interrupteurs associés. Tous les autres groupes moteurs restent alimentés via la première ou la deuxième extrémité de la ligne électrique. Par ailleurs, en cas de défaut électrique sur la ligne électrique, entre un premier point de connexion associé à un premier groupe moteur et un deuxième point de connexion associé à un deuxième groupe moteur, le premier interrupteur connecté au premier point de connexion et le deuxième interrupteur associé au deuxième point de connexion sont ouverts, les autres interrupteurs étant laissés fermés. Le tronçon de ligne électrique en défaut est alors isolé tout en maintenant l'alimentation de tous les groupes moteurs.

Selon une forme particulière de réalisation, le réseau électrique annulaire comporte en outre, pour chaque groupe moteur, un troisième interrupteur connectant le premier point de connexion au deuxième point de connexion de la ligne électrique. En d'autres termes, les troisièmes interrupteurs forment des voies de dérivation des groupes moteurs. Dans cette forme de réalisation, le réseau électrique annulaire permet de contrer des défauts électriques présents simultanément dans plusieurs groupes moteurs. Les premier et deuxième interrupteurs associés aux groupes moteurs en défaut sont ouverts, afin de les isoler électriquement, et les troisièmes interrupteurs de ces groupes moteurs sont fermés, afin de maintenir la continuité de la ligne électrique et d'alimenter tous les groupes moteurs qui ne sont pas en défaut.

Les interrupteurs du réseau électrique annulaire sont de préférence des interrupteurs commandés, afin de permettre une gestion automatique de la configuration du réseau.

Le système propulsif peut comprendre une unité de commande du réseau électrique annulaire. L'unité de commande est par exemple agencée pour commander l'ouverture et la fermeture des interrupteurs du réseau électrique annulaire en fonction de la détection de défauts électriques au niveau des groupes moteurs et/ou de la ligne électrique. Les défauts électriques peuvent être détectés à partir d'une surveillance des courants et/ou des tensions au niveau des différents moteurs électriques. Les courants et/ou les tensions utilisés correspondent par exemple aux signaux mesurés pour une régulation des moteurs électriques.

Selon un premier mode de réalisation, la source d'alimentation électrique comprend un ou plusieurs ensembles de génération d'électricité. La puissance électrique est par exemple générée à partir d'une énergie fossile. En particulier, chaque ensemble de génération d'électricité peut comporter un moteur à combustion interne et un générateur électrique. Le générateur électrique est accouplé mécaniquement à un rotor du moteur à combustion interne et est connecté au bus d'alimentation électrique. Le moteur à combustion interne est par exemple une turbine à gaz.

Selon un deuxième mode de réalisation, la source d'alimentation électrique comprend une unité de stockage d'énergie électrique connectée au bus d'alimentation électrique. L'unité de stockage d'énergie électrique peut notamment comporter une batterie ou des supercondensateurs.

Les premiers et deuxièmes modes de réalisation sont parfaitement compatibles entre eux. À titre d'exemple, le ou les ensembles de génération d'électricité peuvent fournir une puissance moyenne tandis que l'unité de stockage d'énergie électrique apporte une puissance supplémentaire dans certaines phases de vol énergivores et se recharge pendant des phases de vol nécessitant moins de puissance. Par ailleurs, l'unité de stockage d'énergie électrique peut être utilisée seule pour fournir la puissance nécessaire aux groupes moteurs, notamment lorsque l'aéronef doit limiter son empreinte sonore.

Avantageusement, la source d'alimentation électrique comprend un interrupteur et/ou un disjoncteur entre chaque générateur électrique et le bus d'alimentation électrique et/ou entre l'unité de stockage d'énergie électrique et le bus d'alimentation électrique. En présence d'interrupteurs, il est possible de sélectionner le ou les éléments de la source d'alimentation participant à la fourniture de puissance électrique. Les disjoncteurs permettent d'isoler électriquement les éléments en défaut afin de maintenir une fourniture de puissance électrique.

Selon une forme particulière de réalisation, la source d'alimentation électrique est agencée pour délivrer un courant continu sur le bus d'alimentation électrique. La gestion de puissance des moteurs électriques est alors facilitée.

Chaque ensemble de génération d'électricité peut comporter un redresseur connecté entre le générateur électrique et le bus d'alimentation électrique. Il s'agit par exemple d'un redresseur à modulation de largeur d'impulsion et à absorption sinusoïdale. Un tel redresseur autorise un meilleur contrôle du courant injecté sur le bus d'alimentation électrique et permet donc un fonctionnement des moteurs électriques avec un minimum de pertes fer et un minimum de réjection harmonique, aussi bien en amont qu'en aval du redresseur. Du fait de la présence d'un signal en sortie du redresseur présentant un faible taux de distorsion harmonique, plusieurs générateurs électriques peuvent être couplés en parallèle sans risque de formation de courants de recirculation au sein des transistors du redresseur.

La source d'alimentation électrique peut comporter un hacheur connecté entre l'unité de stockage d'énergie électrique et le bus d'alimentation électrique. Le hacheur permet d'adapter la tension fournie par l'unité de stockage d'énergie électrique au niveau de tension requis sur le bus d'alimentation électrique. Il permet également de gérer la charge de l'unité de stockage d'énergie électrique.

Selon une autre forme de réalisation, la source d'alimentation électrique est agencée pour délivrer un courant alternatif sur le bus d'alimentation électrique. Il peut s'agir d'un courant alternatif monophasé ou polyphasé, par exemple triphasé.

Chaque ensemble de génération d'électricité peut comporter un convertisseur alternatif-alternatif connecté entre le générateur électrique et le bus d'alimentation électrique.

Par ailleurs, la source d'alimentation peut comporter un onduleur connecté entre l'unité de stockage d'énergie électrique et le bus d'alimentation électrique.

Le circuit de commande de chaque groupe moteur peut comporter un convertisseur. Le convertisseur permet d'adapter la tension fournie par le bus d'alimentation électrique à la tension nécessaire pour le moteur électrique.

Dans un mode de réalisation particulier, le circuit de commande de chaque groupe moteur est intégré au moteur. Le moteur est alors communément appelé « smart moteur ». Une telle intégration du circuit de commande améliore la compacité du groupe moteur et permet de mutualiser le système de refroidissement du moteur et de son électronique associée.

Selon une première variante de réalisation, chaque groupe moteur comporte une paire d'hélices contrarotatives, chaque hélice étant couplée mécaniquement à un rotor du moteur électrique. Une première hélice est couplée au rotor de manière à tourner dans le même sens que lui et une deuxième hélice est couplée au rotor de manière à tourner dans le sens inverse.

Selon une deuxième variante de réalisation, le moteur électrique de chaque groupe moteur comporte un unique stator et deux rotors contrarotatifs. Chaque groupe moteur comporte alors une paire d'hélices dont l'une est couplée mécaniquement à un premier rotor et l'autre à un deuxième rotor.

Dans cette deuxième variante de réalisation, les deux rotors sont avantageusement pilotés par un même convertisseur.

L'invention a également pour objet un aéronef à voilure tournante comportant un système propulsif tel que décrit précédemment.

### BRÈVE DESCRIPTION DES DESSINS

D'autres caractéristiques, détails et avantages de l'invention ressortiront à la lecture de la description qui va suivre, donnée uniquement à titre d'exemple et faite en référence aux dessins annexés pour lesquels :
- la figure 1 représente schématiquement un exemple d'aéronef à voilure tournante équipé d'un premier exemple de système propulsif selon l'invention ;
- la figure 2 représente un deuxième exemple de système propulsif selon l'invention ;
- la figure 3 illustre une reconfiguration du réseau électrique pour l'exemple de système propulsif selon la figure 2 ;
- la figure 4 représente un troisième exemple de système propulsif selon l'invention ;
- la figure 5 illustre une reconfiguration du réseau électrique pour l'exemple de système propulsif selon la figure 4.

### EXPOSÉ DÉTAILLÉ DE MODES DE RÉALISATION PARTICULIERS

À titre de remarque préliminaire, il est indiqué que par souci de concision, les différents éléments désignés ci-dessous par une référence terminée par une lettre peuvent également être désignés par la même référence mais sans lettre finale.

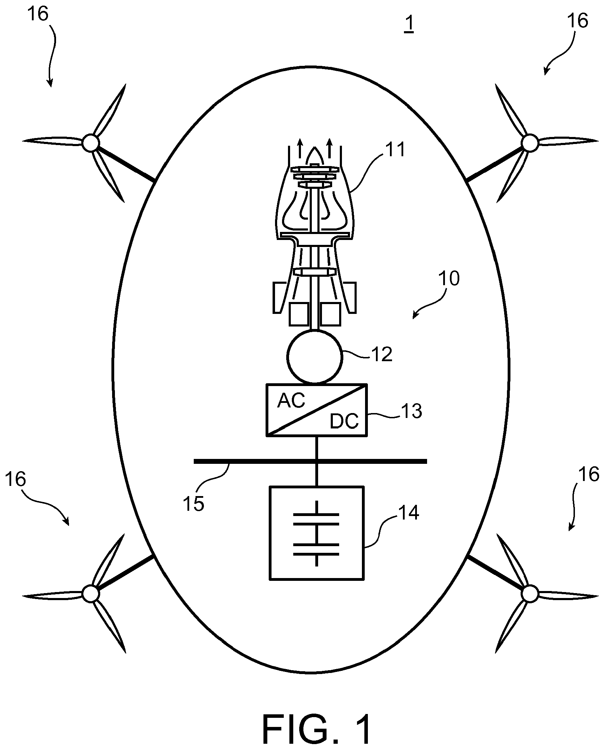

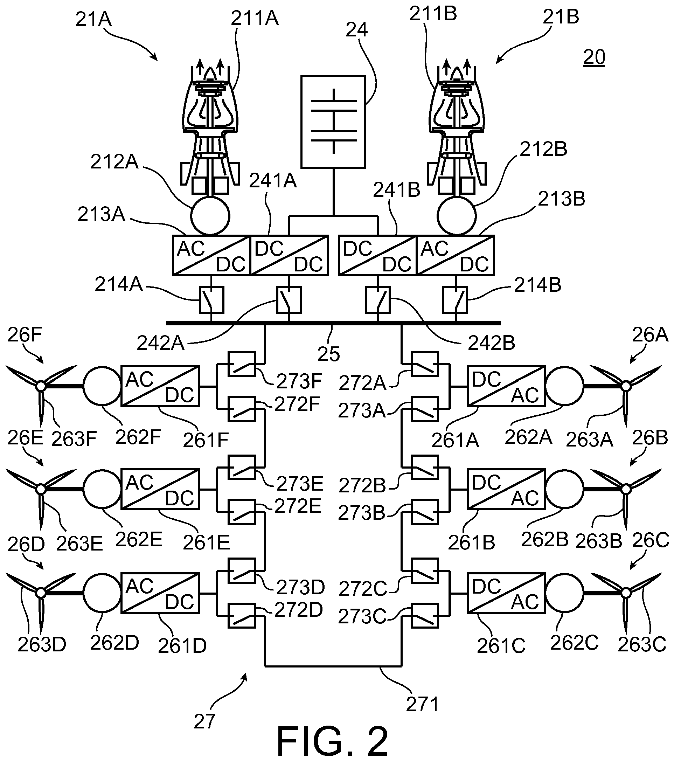

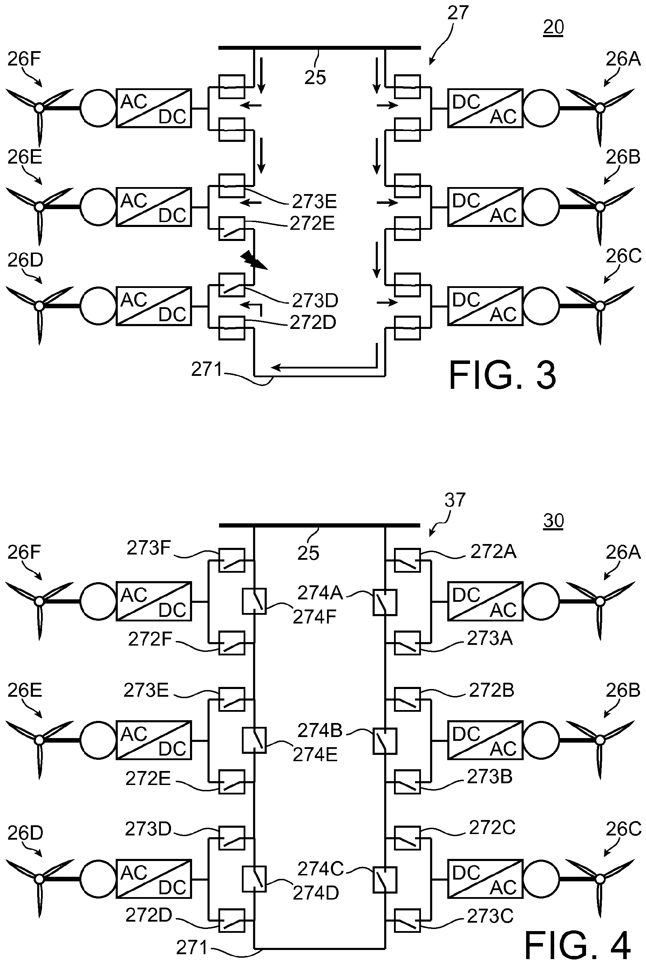

La figure 1 représente schématiquement un exemple d'aéronef à voilure tournante équipé d'un premier exemple de système propulsif selon l'invention. L'aéronef 1 ici représenté est un aéronef quadrirotor, parfois également appelé « quadricopter ». Il embarque un système propulsif 10 comportant une turbine à gaz 11, un générateur électrique 12, un redresseur 13, une batterie électrochimique 14, un bus d'alimentation électrique 15, un réseau électrique annulaire, non représenté, et quatre groupes moteurs 16. Le générateur électrique 12 est entraîné en rotation par un rotor de la turbine à gaz 11 et délivre une tension alternative au redresseur 13. Le redresseur 13 injecte la tension redressée sur le bus d'alimentation électrique 15 afin de distribuer la puissance électrique en direction des groupes moteurs 16. La batterie 14 est également connectée au bus d'alimentation électrique 15. Elle est agencée pour se recharger lorsque le générateur électrique 12 délivre une puissance supérieure à la puissance consommée par les groupes moteurs 16. La batterie 14 est également agencée pour fournir de la puissance électrique lorsque le générateur électrique 12 délivre une puissance insuffisante pour les groupes moteurs 16 ou lorsque le générateur électrique 12 est à l'arrêt. Chaque groupe moteur 16 comporte au minimum un moteur électrique (non représenté) et une hélice 161 entraînée par le moteur électrique associé. Un réseau électrique annulaire, décrit dans des exemples de réalisation en référence aux figures 2 et 4, relie le bus d'alimentation électrique 15 à chacun des groupes moteurs 16. En raison de la présence simultanée, dans la chaîne de transmission de puissance du système propulsif, d'une énergie mécanique et d'une énergie électrique, le système propulsif peut être qualifié d'hybride. En particulier, il peut être appelé « architecture à hybridation série ».

La figure 2 représente plus en détail un deuxième exemple de système propulsif selon l'invention, notamment son réseau électrique annulaire. Le système propulsif 20 comporte deux ensembles 21A, 21B de génération d'électricité, une unité 24 de stockage d'énergie électrique, un bus 25 d'alimentation électrique, six groupes moteurs 26A, 26B, 26C, 26D, 26E, 26F et un réseau électrique annulaire 27.

Chaque ensemble 21 de génération d'électricité comporte une turbine à gaz 211A, 211B, un générateur électrique 212A, 212B, un redresseur 213A, 213B et un interrupteur commandé 214A, 214B. Chaque générateur électrique 212 est couplé mécaniquement à une turbine à gaz 211 et délivre une tension alternative au redresseur respectif 213. Chaque redresseur 213 convertit la tension alternative en une tension continue adaptée au bus 25 d'alimentation électrique. Chaque interrupteur commandé 214 permet de connecter un ensemble 21 de génération d'électricité au bus 25 d'alimentation électrique à l'état fermé et d'isoler ces éléments à l'état ouvert. Les deux ensembles 21A, 21B de générations d'électricité peuvent fonctionner simultanément ou en alternance, notamment en fonction des besoins en puissance électrique. Il est à noter que les ensembles 21 de génération d'électricité peuvent être de différents types. En particulier, ils ne comportent pas nécessairement de turbine à gaz; ils pourraient également comporter tout autre type de moteur à combustion interne ou une pile à combustible. D'autre part, les ensembles de génération d'électricité pourraient également être agencés pour délivrer une tension alternative sur le bus 25 d'alimentation électrique. Par ailleurs, le nombre d'ensembles de génération d'électricité peut être adapté. Un seul ensemble peut être suffisant mais un nombre supérieur ou égal à trois peut aussi être envisagé.

L'unité 24 de stockage d'énergie électrique comporte par exemple une batterie électrochimique ou des supercondensateurs. Elle peut également comporter une unité de gestion d'énergie agencée pour gérer sa charge et sa décharge. L'unité 24 de stockage est associée à deux hacheurs 241A, 241B et deux interrupteurs commandés 242A, 242B montés dans une configuration parallèle. Les hacheurs 241 permettent d'adapter les niveaux de tension entre l'unité de stockage électrique 24 et le bus 25 d'alimentation électrique. De préférence, les interrupteurs commandés 242A, 242B sont commandés de manière inversée, afin d'empêcher une utilisation simultanée des deux hacheurs 241A, 241B. La présence d'une paire de hacheurs et d'interrupteurs apporte une redondance pour la gestion de panne des hacheurs.

Le bus 25 d'alimentation électrique est agencé pour connecter en parallèle chacun des ensembles 21 de génération d'électricité, l'unité 24 de stockage d'énergie électrique et le réseau électrique annulaire 27. Dans le cas d'une transmission d'une puissance électrique à courant continu (DC), il comporte au minimum deux conducteurs électriques. Dans le cas d'une transmission d'une puissance électrique à courant alternatif (AC), il comporte au minimum un conducteur électrique par phase. Dans certains modes de réalisation, le bus 25 peut être réduit à de simples bornes électriques.

Chaque groupe moteur 26 comporte un onduleur 261A, 261B, 261C, 261D, 261E, 261F, un moteur électrique 262A, 262B, 262C, 262D, 262E, 262F et une hélice 263A, 263B, 263C, 263D, 263E, 263F. Chaque onduleur 261 reçoit un courant électrique continu du réseau électrique annulaire 27 et le convertit en un courant électrique alternatif adapté à la puissance demandée par le moteur électrique 262. Chaque hélice 263 est couplée mécaniquement au rotor du moteur électrique 262 associé. Les onduleurs 261 peuvent être intégrés aux moteurs électriques 262. Autrement dit, ils peuvent être intégrés dans le boîtier des moteurs électriques. Les moteurs électriques sont alors communément appelés « smart motors ». Dans l'exemple de réalisation de la figure 2, le système propulsif 20 comporte six groupes moteurs 26A-26F. Il pourrait néanmoins en comporter un nombre différent. Afin de conserver une capacité de propulsion suffisante, y compris en cas de défaut d'un groupe moteur, le système propulsif selon l'invention comporte au minimum quatre groupes moteurs. En pratique, il peut avantageusement en comporter au moins huit.

Dans un autre mode de réalisation, non représenté, le moteur électrique de chaque groupe moteur est associé à un couple d'hélices contrarotatives. Une première hélice est couplée mécaniquement au rotor du moteur électrique de manière à tourner dans le même sens que lui et une deuxième hélice est couplée mécaniquement au rotor du moteur électrique de manière à tourner dans un sens opposé. La première hélice peut notamment être couplée directement au rotor du moteur électrique. La deuxième hélice est typiquement couplée au rotor du moteur électrique par l'intermédiaire d'un engrenage. Avantageusement, les groupes moteurs sont agencés de manière à ce que dans chaque couple, les hélices tournent à des vitesses de rotation égales.

Encore dans un autre mode de réalisation, non représenté, chaque groupe moteur comporte un onduleur, deux moteurs électriques et deux hélices. Une première hélice est couplée mécaniquement au rotor d'un premier moteur électrique et une deuxième hélice est couplée mécaniquement au rotor d'un deuxième moteur électrique. L'onduleur de chaque groupe moteur alimente en parallèle les deux moteurs électriques. La masse des groupes moteurs est alors avantageusement réduite. Les groupes moteurs sont agencés de manière à ce que dans chaque couple, les première et deuxième hélices tournent dans des sens opposés, de préférence à des vitesses de rotation égales.

Dans un mode de réalisation encore différent, non représenté, chaque groupe moteur comporte un onduleur, un moteur électrique à double rotor et deux hélices. Chaque moteur électrique comporte un unique stator et deux rotors contrarotatifs. Une première hélice est couplée mécaniquement à un premier rotor du moteur électrique et une deuxième hélice est couplée mécaniquement à un deuxième rotor du moteur électrique. L'onduleur de chaque groupe moteur alimente en parallèle les deux rotors, conduisant à un gain de masse. Chaque groupe moteur est agencé de manière à ce que les première et deuxième hélices tournent dans des sens opposés, de préférence à des vitesses de rotation égales.

Dans les différents modes de réalisation des groupes moteurs, les moteurs électriques peuvent être des « smart motors », c'est-à-dire des moteurs intégrant le circuit de commande, notamment les onduleurs, dans leur boîtier. Le refroidissement des moteurs électriques et du circuit de commande peut ainsi être réalisé par des moyens communs. Les moteurs électriques sont par exemple refroidis à air par convection naturelle ou par convection forcée, par exemple via un ventilateur accouplé au rotor ou par les pales des hélices. De préférence, les hélices sont directement couplées mécaniquement aux rotors des moteurs électriques. Cet accouplement, appelé « direct drive » en anglais, évite la présence d'engrenages qui nécessitent généralement un circuit de lubrification. Les moteurs électriques peuvent notamment être des machines à flux axial. Il en résulte une facilité d'intégration des rotors au plus près des hélices. Tout type de moteur électrique peut être utilisé. Néanmoins, les moteurs électriques sont de préférence aptes à être désexcités, soit mécaniquement par un accouplement débrayable, soit électriquement par une diminution du flux inducteur, en cas de défaut interne des moteurs électriques.

Par ailleurs, chaque onduleur peut comporter, en plus du ou des bras nécessaires pour alimenter un ou plusieurs moteurs électriques, un ou plusieurs bras de secours, aptes à être utilisés à la place d'un bras défaillant. La fonction d'adaptation du courant électrique peut ainsi être maintenue dans chaque groupe moteur malgré la présence d'une défaillance d'un bras de l'onduleur. De préférence, chaque bras est protégé par un élément de type thermofusible afin d'isoler très rapidement un bras en défaut des autres bras.

Le réseau électrique annulaire 27 est agencé pour connecter chacun des groupes moteurs 26 au bus 25 d'alimentation électrique dans une configuration en anneau. Le réseau électrique annulaire 27 comporte une ligne électrique 271 et, pour chaque groupe moteur 26, une paire d'interrupteurs commandés 272A et 273A, 272B et 273B, 272C et 273C, 272D et 273D, 272E et 273E, 272F et 273F. La ligne électrique 271 est connectée à chacune de ses extrémités au bus 25. Elle est interrompue au niveau de chaque groupe moteur 26 afin de permettre une connexion reconfigurable avec ces groupes moteurs 26. Chaque interruption forme un premier point de connexion du côté de l'une des extrémités de la ligne électrique 271 et un deuxième point de connexion du côté de l'autre des extrémités de la ligne électrique 271. Chaque interrupteur 272 est connecté entre le premier point de connexion et une entrée de l'onduleur 261 du groupe moteur 26 correspondant. Chaque interrupteur 273 est connecté entre le deuxième point de connexion et l'entrée de ce même onduleur 261. Ainsi, dans cette configuration en anneau, la ligne électrique 271 relie successivement les groupes moteurs 26 les uns aux autres en formant une boucle se refermant sur le bus 25. Le système propulsif 20 comporte en outre une unité de commande du réseau électrique annulaire 27, non représentée, agencée pour commander l'ouverture et la fermeture des interrupteurs 272, 273. La commande peut notamment être effectuée en fonction de la détection de défauts électriques au niveau des groupes moteurs 26 et/ou de la ligne électrique 271. En l'absence de défauts électriques, l'ensemble des interrupteurs 272, 273 peut être commandé à l'état passant.

La figure 3 illustre la reconfiguration du réseau électrique annulaire 27 décrit en référence à la figure 2 en cas de défaut électrique détecté sur une portion de la ligne électrique 271 entre les groupes moteurs 26D et 26E. Ladite portion est isolée en ouvrant l'interrupteur 273D connecté au groupe moteur 26D et l'interrupteur 272E connecté au groupe moteur 26E. Il est à remarquer que les deux groupes moteurs 26D et 26E restent alimentés, le premier par la première extrémité de la ligne électrique 271 et le deuxième par sa deuxième extrémité. Le défaut électrique n'a ainsi aucune incidence sur le fonctionnement des groupes moteurs 26. Par ailleurs, en cas de défaut électrique au sein d'un groupe moteur 26, par exemple en cas de défaut d'un onduleur 261 ou d'un moteur électrique 262, l'ensemble du groupe moteur concerné peut être isolé du réseau électrique en ouvrant les deux interrupteurs 272, 273 associés. Tous les autres groupes moteurs 26 restent alimentés, les uns par la première extrémité de la ligne électrique 271 et les autres par la deuxième extrémité de la ligne électrique.

La figure 4 représente un troisième exemple de système propulsif selon l'invention. Ce système propulsif 30 se distingue uniquement du système propulsif 20 de la figure 2 en ce que le réseau électrique annulaire 37 comporte en outre, pour chaque groupe moteur 26, un troisième interrupteur 274A, 274B, 274C, 274D, 274E, 274F. Chaque interrupteur 274 est connecté entre le premier et le deuxième point de connexion de la ligne électrique 271. Ainsi, chaque interrupteur 274 permet de rétablir la continuité de la ligne électrique 271 au niveau d'une interruption. L'unité de commande du réseau électrique annulaire 37 peut également commander l'ouverture et la fermeture des interrupteurs 274. En l'absence de défauts électriques, l'ensemble des interrupteurs 274 est normalement commandé à l'état ouvert.

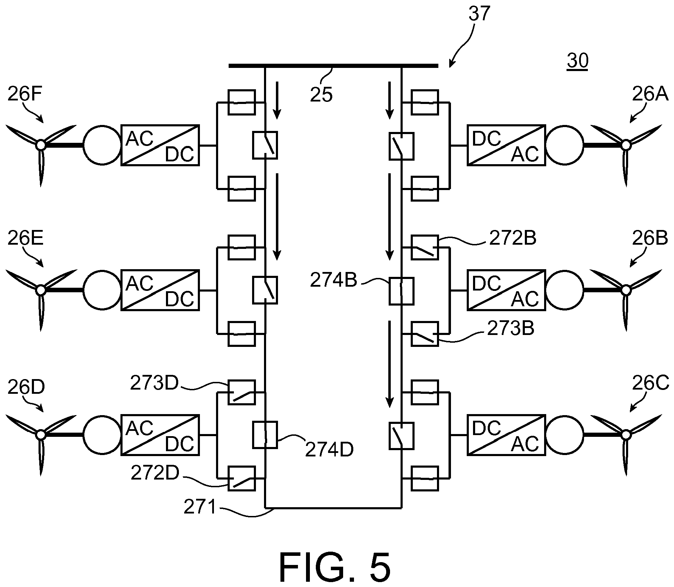

La figure 5 illustre la reconfiguration du réseau électrique annulaire 37 décrit en référence à la figure 4 en cas de défaut électrique détecté à la fois sur le groupe moteur 26B et sur le groupe moteur 26D. Ces deux groupes moteurs 26B et 26D sont isolés du réseau électrique annulaire 37 en ouvrant les interrupteurs 272B, 273B, 272D et 273D. La continuité électrique de l'anneau est rétablie en fermant les interrupteurs 274B et 274D. Ainsi, tous les autres groupes moteurs 26 restent alimentés, y compris le groupe moteur 26C situés entre les groupes moteurs 26B et 26D en défaut.

## Revendications

1. Système propulsif pour aéronef à voilure tournante multirotor, comprenant :
▪ une source d'alimentation électrique (21A, 21B, 24) apte à délivrer un courant d'alimentation,
▪ un bus d'alimentation électrique (25) connecté à la source d'alimentation électrique, et
▪ au moins quatre groupes moteurs (26A, 26B, 26C, 26D, 26E, 26F), chaque groupe moteur comportant un circuit de commande (261A, 261B, 261C, 261D, 261E, 261F), un moteur électrique (262A, 262B, 262C, 262D, 262E, 262F) connecté au circuit de commande et une hélice (263A, 263B, 263C, 263D, 263E, 263F) couplée mécaniquement à un rotor du moteur électrique, le circuit de commande étant apte à alimenter le moteur électrique à partir du courant d'alimentation délivré par la source d'alimentation électrique,
le système propulsif étant **caractérisé en ce qu'**il comprend, en outre :
▪ un réseau électrique annulaire (27, 37) apte à connecter le circuit de commande de chaque groupe moteur au bus d'alimentation électrique, le réseau électrique annulaire comportant :
- une ligne électrique (271) dont une première extrémité et une deuxième extrémité sont connectées au bus d'alimentation électrique, la ligne électrique étant interrompue au niveau de chaque groupe moteur et comprenant un premier point de connexion du côté de sa première extrémité et un deuxième point de connexion du côté de sa deuxième extrémité, et
- pour chaque groupe moteur (26A, 26B, 26C, 26D, 26E, 26F), un premier interrupteur (272A, 272B, 272C, 272D, 272E, 272F) et un deuxième interrupteur (273A, 273B, 273C, 273D, 273E, 273F), le premier interrupteur connectant le circuit de commande (261A, 261B, 261C, 261D, 261E, 261F) du groupe moteur au premier point de connexion de la ligne électrique, le deuxième interrupteur connectant ledit circuit de commande au deuxième point de connexion de la ligne électrique.

2. Système propulsif selon la revendication 2, dans lequel le réseau électrique annulaire (27, 37) comporte en outre, pour chaque groupe moteur, un troisième interrupteur (274A, 274B, 274C, 274D, 274E, 274F) connectant le premier point de connexion au deuxième point de connexion de la ligne électrique.

3. Système propulsif selon l'une des revendications 1 et 2 comprenant, en outre, une unité de commande du réseau électrique annulaire, l'unité de commande étant agencée pour commander l'ouverture et la fermeture des interrupteurs du réseau électrique annulaire en fonction de la détection de défauts électriques au niveau des groupes moteurs et/ou de la ligne électrique.

4. Système propulsif selon l'une des revendications précédentes, dans lequel la source d'alimentation électrique comprend un ou plusieurs ensembles de génération d'électricité (21A, 21B), chaque ensemble comportant un moteur à combustion interne (211A, 211B) et un générateur électrique (212A, 212B), le générateur électrique étant accouplé mécaniquement à un rotor du moteur à combustion interne et étant connecté au bus d'alimentation électrique (25).

5. Système propulsif selon la revendication 4, dans lequel la source d'alimentation électrique comprend un interrupteur (213A, 213B, 241A, 241B) et/ou un disjoncteur entre chaque générateur électrique (212A, 212B) et le bus d'alimentation électrique (25).

6. Système propulsif selon l'une des revendications précédentes, dans lequel la source d'alimentation électrique comprend une unité de stockage d'énergie électrique (24) connectée au bus d'alimentation électrique (25).

7. Système propulsif selon la revendication 6, dans lequel la source d'alimentation électrique comprend un interrupteur (213A, 213B, 241A, 241B) et/ou un disjoncteur entre l'unité de stockage d'énergie électrique et le bus d'alimentation électrique.

8. Système propulsif selon l'une des revendications précédentes, dans lequel le circuit de commande de chaque groupe moteur comporte un convertisseur (261A, 261B, 261C, 261D, 261E, 261F).

9. Système propulsif selon l'une des revendications précédentes, dans lequel le moteur électrique de chaque groupe moteur comporte un unique stator et deux rotors contra rotatifs.

10. Aéronef à voilure tournante multirotor comportant un système propulsif (20, 30) selon l'une des revendications précédentes.

## Patentansprüche

1. Antriebssystem für ein Multirotor-Drehflügelflugzeug, mit:
• einer Stromversorgungsquelle (21A, 21B, 24), geeignet um eine Stromversorgung zu liefern,
• einer elektrischen Stromsammelschiene (25), die mit der Stromversorgungsquelle verbunden ist, und
• mindestens vier Motoreinheiten (26A, 26B, 26C, 26D, 26E, 26F), wobei jede Motoreinheit einen Steuerkreis (261A, 261B, 261C, 261D, 261E, 261F) umfasst, einem Elektromotor (262A, 262B, 262C, 262D, 262E, 262F), der mit dem Steuerkreis verbunden ist und einem Propeller (263A, 263B, 263C, 263D, 263E, 263F), der mechanisch mit einem Rotor des Elektromotors gekoppelt ist, wobei der Steuerkreis in der Lage ist, den Elektromotor mit dem von der Stromversorgungsquelle gelieferten Strom zu versorgen,
wobei das Antriebssystem ist **dadurch gekennzeichnet, dass** es ferner umfasst:
• ein ringförmiges Stromnetz (27, 37), das dazu geeignet ist, den Steuerkreis jeder Motoreinheit mit der Stromsammelschiene zu verbinden, wobei das ringförmige Stromnetz umfasst:
- eine Stromleitung (271), von der ein erstes Ende und ein zweites Ende an die Stromsammelschiene angeschlossen sind, wobei die Stromleitung auf Höhe jeder Motoreinheit unterbrochen ist und einen ersten Verbindungspunkt an ihrem ersten Ende und einen zweiten Verbindungspunkt an ihrem zweiten Ende beinhaltet, und
- für jede Motoreinheit (26A, 26B, 26C, 26D, 26E, 26F) einen ersten Schalter (272A, 272B, 272C, 272D, 272E, 272F) und einen zweiten Schalter (273A, 273B, 273C, 273D, 273E, 273F), wobei der erste Schalter
den Steuerkreis (261A, 261B, 261C, 261D, 261E, 261F) der Motoreinheit mit dem ersten Anschlusspunkt der Stromleitung verbindet, der zweite Schalter den Steuerkreis mit dem zweiten Anschlusspunkt der Stromleitung verbindet.

2. Antriebssystem nach Anspruch 1, wobei das ringförmige Stromnetz (27, 37) ferner für jede Motoreinheit einen dritten Schalter (274A, 274B, 274C, 274D, 274E, 274F) aufweist, der den ersten Verbindungspunkt mit dem zweiten Verbindungspunkt der Stromleitung verbindet.

3. Antriebssystem nach einem der Ansprüche 1 und 2, das außerdem eine Steuereinheit für das ringförmige Stromnetz umfasst, wobei die Steuereinheit so angeordnet ist, dass sie das Öffnen und Schließen von Schaltern des ringförmigen Stromnetzes in Abhängigkeit von der Erkennung von elektrischen Fehlern an den Motoreinheiten und/oder der Stromleitung steuert.

4. Antriebssystem nach einem der vorhergehenden Ansprüche, wobei die Stromversorgungsquelle eine oder mehrere Stromerzeugungseinheiten (21A, 21B) umfasst, wobei jede Einheit einen Verbrennungsmotor (211A, 211B) und einen Stromgenerator (212A, 212B) umfasst, wobei der Stromgenerator mechanisch mit einem Rotor des Verbrennungsmotors gekoppelt ist und mit der Stromsammelschiene (25) verbunden ist.

5. Antriebssystem nach Anspruch 4, wobei die Stromversorgungsquelle einen Schalter (213A, 213B, 241A, 241B) und/oder einen Unterbrecher zwischen jedem Stromgenerator (212A, 212B) und der Stromsammelschiene (25) umfasst.

6. Antriebssystem nach einem der vorhergehenden Ansprüche, wobei die Stromversorgungsquelle eine elektrische Energiespeichereinheit (24) umfasst, die mit der Stromsammelschiene (25) verbunden ist.

7. Antriebssystem nach Anspruch 6, wobei die Stromversorgungsquelle einen Schalter (213A, 213B, 241A, 241B) und/oder einen Unterbrecher zwischen der elektrischen Energiespeichereinheit und der Stromsammelschiene umfasst.

8. Antriebssystem nach einem der vorhergehenden Ansprüche, wobei der Steuerkreis jeder Motoreinheit einen Umrichter (261A, 261B, 261C, 261D, 261E, 261F) umfasst.

9. Antriebssystem nach einem der vorhergehenden Ansprüche, wobei der Elektromotor jeder Motoreinheit einen einzigen Stator und zwei gegenläufige Rotoren aufweist.

10. Multirotor-Drehflügelflugzeug mit einem Antriebssystem (20, 30) nach einem der vorhergehenden Ansprüche.

## Claims

1. Propulsion system for multi-rotor rotary wing aircraft, comprising:
▪ an electrical power source (21A, 21B, 24) capable of outputting a power supply current,
▪ an electrical power supply bus (25) connected to the electrical power supply source, and
▪ at least four motor units (26A, 26B, 26C, 26D, 26E, 26F), each motor unit comprising a control circuit (261A, 261B, 261C, 261D, 261E, 261F), an electric motor (262A, 262B, 262C, 262D, 262E, 262F) connected to the control circuit and a propeller (263A, 263B, 263C, 263D, 263E, 263F) mechanically connected to a rotor of the electric motor, the control circuit being capable of supplying power to the electric motor from the power supply current output by the electrical power supply source,
the propulsion system being **characterized in that** it further comprises:
▪ an annular electrical network (27, 37) capable of connecting each motor unit control circuit to the electrical power supply bus, the annular electrical network comprising:
- an electrical line (271), of which a first end and a second end are connected to the electrical power supply bus, the electrical line being interrupted at each motor unit and comprising a first connection point at its first end and a second connection point at its second end, and
- for each motor unit (26A, 26B, 26C, 26D, 26E, 26F), a first switch (272A, 272B, 272C, 272D, 272E, 272F) and a second switch (273A, 273B, 273C, 273D, 273E, 273F), the first switch connecting the motor unit control circuit (261A, 261B, 261C, 261D, 261E, 261F) to the first connection point of the electrical line, the second switch connecting said control circuit to the second connection point of the electrical line.

2. Propulsion system according to claim 2, wherein the annular electrical network (27, 37) also comprises a third switch (274A, 274B, 274C, 274D, 274E, 274F) for each motor unit, connecting the first connection point to the second connection point of the electrical line.

3. Propulsion system according to one of claims 1 and 2, also comprising a control unit of the annular electrical network, the control unit being arranged to control opening and closing of the switches of the annular electrical network as a function of the detection of electrical faults at motor units and/or the electrical line.

4. Propulsion system according to one of the preceding claims, wherein the electrical power supply source comprises one or several electricity generating sets (21A, 21B), each set comprising an internal combustion engine (211A, 211B) and an electricity generator (212A, 212B), the electricity generator being mechanically coupled to a rotor of the internal combustion engine and being connected to the electrical power supply bus (25).

5. Propulsion system according to claim 4, wherein the electrical power supply source comprises a switch (213A, 213B, 241A, 241B) and/or a circuit breaker between each electricity generator (212A, 212B) and the electrical power supply bus (25).

6. Propulsion system according to one of the preceding claims, wherein the electrical power supply source comprises an electrical energy storage unit (24) connected to the electrical power supply bus (25).

7. Propulsion system according to claim 6, wherein the electrical power supply source comprises a switch (213A, 213B, 241A, 241B) and/or a circuit breaker between the electrical energy storage unit and the electrical power supply bus.

8. Propulsion system according to one of the preceding claims, wherein the control circuit of each motor unit comprises a converter (261A, 261B, 261C, 261D, 261E, 261F).

9. Propulsion system according to one of the preceding claims, wherein the electric motor of each motor unit comprises a single stator and two counter-rotating rotors.

10. Multi-rotor rotary wing aircraft comprising a propulsion system (20, 30) according to any one of the preceding claims.
